# EUROPÄISCHE PATENTANMELDUNG

(11) **EP 1 143 358 A1**
(43) Veröffentlichungstag der Anmeldung: **10.10.2001**
(21) Anmeldenummer: 00107478.0
(22) Anmeldetag: 06.04.2000
(51) Int. Cl.: G06F 17/60, G06F 19/00

(54) **Verfahren zur Organisation und Abwicklung eines Internet-Bonussystems und/oder eines Internet-Gewinnspiels**

(71) Anmelder: TV Miles International B.V., 1075 HH Amsterdam (NL)
(72) Erfinder:
(74) Vertreter: Manitz, Finsterwald & Partner GbR

(57) **Zusammenfassung**

Die Erfindung betrifft ein Verfahren zur Organisation und Abwicklung eines Internet-Bonussystems und/oder eines Internet-Gewinnspiels, bei dem dem jeweiligen User einer Homepage ein individueller Datensatz zugeordnet ist, welcher den User kennzeichnende Daten und zumindest eine Bonus- und/oder Gewinnvariable umfaßt, wobei die Bonus- und/oder Gewinnvariable während der Aktivierung der Homepage in Abhängigkeit von den vom User auf der Homepage vollzogenen Aktivitäten und/oder von der Verweilzeit des Users auf der Homepage verändert wird, woraufhin der User in Abhängigkeit vom jeweiligen Wert der Bonus- und/oder Gewinnvariablen eine Belohnung erhält.

## Beschreibung

Die Erfindung betrifft ein Verfahren zur Organisation und Abwicklung eines Internet-Bonussystems und/oder eines Internet-Gewinnspiels, bei dem dem jeweiligen User einer Homepage ein individueller Datensatz zugeordnet ist, welcher den User kennzeichnende Daten umfaßt.

Für Firmen, die über das Internet Informationen anbieten, ist es erstrebenswert, das Aufsuchen und Benutzen ihrer Homepage für den User attraktiver zu machen, um den User zum wiederholten und möglichst zeitintensiven Aufsuchen der Homepage zu motivieren.

Der Erfindung liegt die Aufgabe zugrunde, ein Verfahren der eingangs genannten Art derart weiterzubilden, daß für den User eine erhöhte Motivation dafür besteht, eine Homepage aufzusuchen und möglichst lange auf dieser Homepage zu verweilen.

Erfindungsgemäß wird diese Aufgabe dadurch gelöst, daß der den User kennzeichnende Daten beinhaltende Datensatz zusätzlich zumindest eine Bonus- und/oder Gewinnvariable umfaßt, wobei die Bonus- und/oder Gewinnvariable während der Aktivierung der Homepage in Abhängigkeit von den vom User auf der Homepage vollzogenen Aktivitäten und/oder von der Verweilzeit des Users auf der Homepage verändert wird, woraufhin der User in Abhängigkeit vom jeweiligen Wert der Bonus- und/oder Gewinnvariablen eine Belohnung erhält.

Auf diese Weise kann erfindungsgemäß also durch die Veränderung, insbesondere eine Erhöhung des Werts der Bonus- und/oder Gewinnvariablen eine Belohnung des Users für auf der Homepage verbrachte Nutzungszeit oder für auf der Homepage ausgeführte Aktivitäten realisiert werden. Der vom User erreichte Wert der Bonus- und/oder Gewinnvariablen kann beispielsweise einen Punktestand symbolisieren, der dem User mit einem entsprechenden Gegenwert vergütet werden kann. Ebenso ist es jedoch auch möglich, den User in Abhängigkeit vom erreichten Wert der Bonus- und/oder Gewinnvariablen an bestimmten exklusiven Gewinnspielen teilnehmen zu lassen oder den User mit einem Sofortgewinn zu belohnen.

Aufgrund des vom User durch die Nutzung der Homepage erreichbaren Gegenwerts bzw. der erreichbaren Gewinnchancen ist der User durch die Implementierung des erfindungsgemäßen Verfahrens in hohem Maße dazu motiviert, die betreffende, nach dem erfindungsgemäßen Verfahren funktionierende Homepage zu nutzen.

Die Art oder der Grad der Belohnung ist insbesondere vom erreichten Wert der Bonus- und/oder Gewinnvariablen und/oder vom Eintreten definierter Ereignisse abhängig. So können beispielsweise gesammelte Bonuspunkte in einen entsprechenden Wert an elektronischer Währung umgetauscht werden, oder es kann die Teilnahme an einem exklusiven Gewinnspiel ausgelöst werden, welche an einen bestimmten Bonuspunktestand gekoppelt ist.

Für den User besonders anschaulich läßt sich das erfindungsgemäße Verfahren dann realisieren, wenn die Bonus- und/oder Gewinnvariable während der Aktivierung der Homepage zeitlich linear hochgezählt wird, was bedeutet, daß sich sein Punktestand mit zunehmender Nutzungszeit der Homepage konstant erhöht. Es ist jedoch ebenso ein nichtlineares Hochzählen realisierbar, bei dem die Bonus- und/oder Gewinnvariable beispielsweise zu Anfang langsam und dann immer schneller hochgezählt wird, so daß der User dazu motiviert wird, möglichst lange auf der Homepage zu verweilen.

Ebenso ist es möglich, daß definierte Aktivitäten des Users auf der Homepage ein beschleunigtes oder verlangsamtes Hochzählen, ein Erniedrigen oder eine sprunghafte Veränderung der Bonus- und/oder Gewinnvariablen bewirken. Auf diese Weise kann der User für bestimmte Aktivitäten besonders belohnt, gegebenenfalls aber, beispielsweise bei einem frühzeitigen Verlassen der Homepage, auch bestraft werden.

Von Vorteil ist es, wenn der die Bonus- und/oder Gewinnvariable umfassende, dem User zugeordnete Datensatz nach Verlassen der Homepage insbesondere auf demjenigen Surfer, auf dem die Homepage hinterlegt ist, gespeichert wird, da sich so ein den User langfristig bindendes Bonusprogramm realisieren läßt. Es wird auf diese Weise möglich, bei einem erneuten Aufruf der Homepage durch den jeweiligen User, ausgehend von dem gespeicherten Wert, eine weitere Veränderung der Bonus- und/oder Gewinnvariablen auszulösen. Der User kann somit beispielsweise durch mehrmaliges Aufrufen der Homepage an unterschiedlichen Tagen seinen Punktestand immer weiter erhöhen und letztlich soviele Punkte sammeln, bis er diese gegen eine von ihm gewünschte Belohnung, die einem bestimmten Gegenwert an Punkten entspricht, eintauschen kann.

Die Veränderung der Bonus- und/oder Gewinnvariablen und/oder die Anzeige deren Werts setzt vorzugsweise erst nach Aktivierung eines auf der Homepage dargestellten Buttons ein. Auf diese Weise hat der User die Möglichkeit, selbst zu entscheiden, ob er bei Nutzung der jeweiligen Homepage das erfindungsgemäße Verfahren aktivieren möchte oder nicht.

Bevorzugt ist es, wenn der aktuelle Wert der Bonus- und/oder Gewinnvariablen während der Aktivierung der Homepage kontinuierlich, insbesondere an einer definierten, vorzugsweise an einer durch eine Mouse-Bewegung definierten Stelle des Bildschirms angezeigt wird. Durch diese kontinuierliche Anzeige wird eine zusätzliche Motivation des Users erreicht, da er ständig über den aktuellen Wert seiner Bonus- und/oder Gewinnvariablen informiert ist und eine entsprechende Veränderung dieser Variablen in Echtzeit verfolgen kann.
Durch die dem User zur Verfügung gestellte Möglichkeit, die Position der Anzeige auf dem Bildschirm selbst zu bestimmen, kann der User den Anzeigeort an eine Stelle verschieben, an der die ihn jeweils interessierende Information der eigentlichen Homepage nicht durch die Anzeige verdeckt wird.

Besonders bevorzugt ist es, wenn der aktuelle Wert der Bonus- und/oder Gewinnvariablen während der Aktivierung der Homepage in Verbindung mit einem definierten, insbesondere Werbeinformation beinhaltenden Symbol angezeigt wird. In diesem Fall kann das Symbol beispielsweise als Firmenlogo des Homepage-Betreibers oder als Firmenlogo eines Werbepartners des Homepage-Betreibers ausgebildet sein, wobei der aktuelle Wert der Bonus- und/oder Gewinnvariablen beispielsweise auf, teilweise auf oder dicht neben diesem Logo erscheinen kann. Auch der vorstehend erwähnte Button zur Aktivierung des erfindungsgemäßen Verfahrens kann Werbeinformation in Form eines Symbols oder eines Firmenlogos enthalten.
Durch diese Maßnahmen läßt sich dem User eine besonders einprägsame Werbeinformation vermitteln, die sich der Homepage-Betreiber beispielsweise von seinen Werbepartnern vergüten lassen kann.

Besonders bevorzugt ist es, wenn dem User eine Mehrzahl von unterschiedlichen Auswahl-Buttons angeboten werden, denen hinsichtlich der Veränderung der jeweils zugeordneten Bonus- und/oder Gewinnvariablen während der Aktivierung der Homepage verschiedene Funktionalitäten zugeordnet sind. So wird es beispielsweise möglich, die unterschiedlichen Auswahl-Buttons zur Aktivierung des erfindungsgemäßen Verfahrens und die mit der Bonus- und/oder Gewinnvariablen gekoppelten Symbole als Logos von mehreren unterschiedlichen Werbepartnern auszubilden, so daß der User zwischen verschiedenen Bonus- oder Gewinnprogrammen der unterschiedlichen Werbepartner wählen kann. Durch die Zuordnung verschiedener Funktionalitäten kann den Interessen verschiedener Werbepartnern gezielt Rechnung getragen werden. So ist es beispielsweise möglich, bei einem Fernsehsender als Werbepartner nach Aktivierung des dem Fernsehsender zugeordneten Auswahl-Buttons eine besonders signifikante Erhöhung der Bonus- und/oder Gewinnvariablen auszulösen, wenn der User die aktuell auf der Homepage hinterlegte Programmvorschau des Fernsehsenders aufgerufen hat.
Die Aktivierung eines Auswahl-Buttons eines anderen Werbepartners kann hingegen beispielsweise die Teilnahme an einem Gewinnspiel auslösen, bei dem Produkte des jeweiligen Werbepartners gewonnen werden können.
Hier existieren beliebig viele weitere Beispiele für die Hinterlegung verschiedener, den jeweiligen Auswahl-Buttons bzw. Symbolen zugeordneter Funktionalitäten, die den Interessen des jeweiligen Werbepartners bestmöglich Rechnung tragen können.

Noch attraktiver wird das erfindungsgemäße Verfahren, wenn eine Veränderung der Bonus- und/oder Gewinnvariablen auch dann erfolgt, wenn der User, ausgehend von der Stamm-Homepage, einen Link zu definierten weiteren Homepages vollzieht und/oder Aktivitäten auf diesen weiteren Homepages ausführt. Hier kann insbesondere ein Link zu Homepages von Werbepartnern vollzogen werden, so daß der User beispielsweise nicht nur auf der Stamm-Homepage, sondern zusätzlich oder alternativ auch auf der Homepage des Werbepartners Punkte sammeln kann, was ihn natürlich zum Aufsuchen dieser Homepage des Werbepartners motiviert.

Nach Vollzug eines Links auf eine weitere Homepage bzw. eine Homepage eines Werbepartners kann der aktuelle Wert der Bonus- und/oder Gewinnvariablen auch während der Aktivierung dieser weiteren Homepage kontinuierlich, insbesondere in Verbindung mit einem gegenüber der Stamm-Homepage unveränderten Symbol angezeigt werden. Das Symbol mit der Bonus- und/oder Gewinnvariablen kann den User somit beim Aufsuchen verschiedener Homepages gewissermaßen "begleiten", so daß er beispielsweise auf verschiedenen Homepages Punkte im Rahmen eines einzigen Bonusprogramms sammeln kann.

Bei einer weiteren Variante des erfindungsgemäßen Verfahrens ist es möglich, auf der Stamm-Homepage mehrere Auswahlmöglichkeiten für verschiedene Links zu weiteren Homepages, insbesondere in Form von Link-Buttons, anzuzeigen, wobei die Art und/oder die Anzahl der Auswahlmöglichkeiten abhängig von dem vorstehend bereits erläuterten, vom User aktivierbaren Auswahl-Button und/oder abhängig vom erreichten Wert der Bonus- und/oder Gewinnvariablen sind. Es kann dann beispielsweise bei Aktivierung des als Logo eines Werbepartners ausgebildeten Auswahl-Buttons auf der Stamm-Homepage ein Link-Button erzeugt werden, welcher einen Link auf die Homepage des ausgewählten Werbepartners ermöglicht. Ebenso kann eine Mehrzahl von Link-Buttons erzeugt werden, die Links zu verschiedenen Homepages ermöglichen, an deren Aufsuchen durch den User der jeweilige Werbepartner Interesse hat.

Alternativ oder zusätzlich kann das erfindungsgemäße Verfahren auch so ausgestaltet werden, daß ein Link zu definierten weiteren Homepages ausgehend von der Stamm-Homepage nur dann möglich ist, wenn die Bonus- und/oder Gewinnvariable bereits einen bestimmten Wert erreicht hat. Diesbezüglich bieten sich insbesondere Links zu kostenpflichtigen Homepages an.

Durch das Aktivieren eines definierten Auswahl-Buttons auf der Stamm-Homepage kann weiterhin auch automatisch - ohne die Aktivierung eines separaten Link-Buttons - ein Link auf eine weitere, dem aktivierten Auswahl-Button zugeordnete Homepage erfolgen. So kann der User durch die Aktivierung eines beispielsweise als Logo eines Werbepartners ausgebildeten Auswahlbuttons sofort oder nach Ablauf einer bestimmten Zeitspanne automatisch auf die Homepage des Werbepartners geschaltet werden.

Bei einer weiteren Variante des erfindungsgemäßen Verfahrens können bestimmte Aktivitäten auf der Stamm-Homepage und/oder auf den weiteren Homepages nur nach Erreichen eines definierten Werts der Bonus- und/oder Gewinnvariablen ausgelöst werden. Auf diese Weise können beispielsweise für bestimmte Bereiche von Homepages exklusive User-Gruppen definiert werden, die alle bereits einen bestimmten Wert ihrer jeweiligen Bonus- und/oder Gewinnvariablen erreicht haben müssen.

Von Vorteil ist es, wenn bei einer ersten Kontaktaufnahme eines Users mit der Homepage userspezifische Daten, insbesondere Name, Postanschrift und/oder e-mail-Adresse in dem dem User zugeordneten Datensatz gespeichert werden. So wird es möglich, mit dem User seitens des Homepage-Betreibers oder seitens eines Werbepartners des Homepage-Betreibers gezielt in Kontakt zu treten, um beispielsweise Werbeinformation zu übermitteln.

Besonders vorteilhaft ist es, wenn die mit dem erfindungsgemäßen Verfahren erzielbare Belohnung über Internet an den User übermittelt wird, insbesondere durch Gutschrift eines bestimmten Betrages an elektronischer Währung, durch Einräumung beestimmter Internet-Shopping-Rechte oder durch Einräumung von über Internet ausübbaren Nutzungsrechten, da in diesem Fall die Vergütung der Belohnung nur minimalen Personalaufwand erfordert.

Die Erfindung wird nachfolgend anhand eines Ausführungsbeispiels unter Bezugnahme auf die Figuren beschrieben; in diesen zeigen:
- Fig. 1: den Aufbau einer im Rahmen des erfindungsgemäßen Verfahrens zum Einsatz gelangenen Tabelle,
- Fig. 2: eine erfindungsgemäß aufgebaute Stamm-Homepage vor Aktivierung des erfindungsgemäßen Verfahrens,
- Fig. 3: eine erfindungsgemäß aufgebaute Stamm-Homepage nach Aktivierung des erfindungsgemäßen Verfahrens, und
- Fig. 4: eine erfindungsgemäß aufgebaute weitere Homepage nach Aktivierung des erfindungsgemäßen Verfahrens.

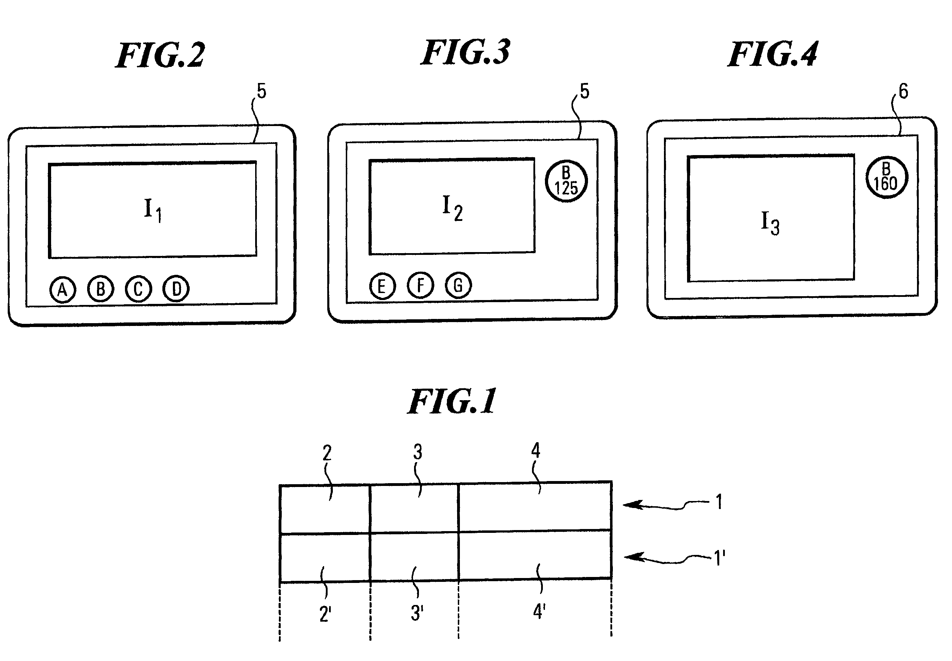

Fig. 1 zeigt eine Tabelle, die aus einer Mehrzahl von im Rahmen der Erfindung zum Einsatz gelangenden Datensätzen besteht, wobei die Anzahl der Datensätze der Anzahl der User entspricht, die das erfindungsgemäße Verfahren nutzen.

Jeder der Datensätze 1, 1' ist jeweils einem User zugeordnet und beinhaltet eine Variable 2, 2' für den Namen des Users, eine Variable 3, 3' für die e-mail-Adresse des Users und eine erfindungsgemäße Bonus- und/oder Gewinnvariable 4, 4'.

Alternativ kann die Tabelle auch noch weitere Variablen umfassen, in denen Zusatzinformationen hinsichtlich des jeweiligen Users abgelegt sind.

In einer Minimalkonfiguration der dargestellten Tabelle umfaßt sie lediglich die Bonus- und/oder Gewinnvariable 4, 4' und eine zusätzliche Variable, die den jeweiligen User kennzeichnet.

Fig. 2 zeigt eine erfindungsgemäß aufgebaute Homepage vor Aktivierung des erfindungsgemäßen Verfahrens. Auf dieser Homepage 5 sind ein Informationsblock I₁ sowie insgesamt vier Auswahl-Buttons A, B, C und D dargestellt. Die Auswahl-Buttons A, B, C, D können beispielsweise als Firmenlogos von Werbepartnern des Betreibers der Stamm-Homepage 5 ausgestaltet sein.

Der User hat nun die Möglichkeit, einen der vier Auswahl-Buttons A, B, C, D zu aktivieren. Wenn der User beispielsweise den Auswahl-Button B aktiviert, wird die Stamm-Homepage 5 gemäß Fig. 3 verändert, indem in der rechten oberen Ecke das Logo des dem Auswahl-Button B zugeordneten Werbepartners gemeinsam mit einer Zahl erscheint, wobei diese Zahl den augenblicklichen Wert der Bonus- und/oder Gewinnvariablen 4 des Users repräsentiert. Zusätzlich wird ein Informationsblock I₂ angezeigt, unterhalb dessen drei Link-Buttons E, F und G erscheinen, über die der User Links zu definierten weiteren Homepages vollziehen kann, an deren Aufsuchen der Werbepartner interessiert ist.

Nach Betätigung eines Link-Buttons E, F, G gelangt der User auf eine weitere Homepage 6, die in Fig. 4 dargestellt ist. Diese weitere Homepage 6 umfaßt wiederum einen Informationsblock I₃, wobei hier ebenfalls in der rechten oberen Ecke das gegenüber Fig. 3 unveränderte Logo des Werbepartners gemeinsam mit dem aktuellen Wert der Bonus- und/oder Gewinnvariablen angezeigt wird.

Durch die in Verbindung mit den Figuren erläuterte Variante des erfindungsgemäßen Verfahrens kann das gemeinsam mit dem Wert der Bonus- und/oder Gewinnvariablen dargestellte Logo eines Werbepartner den User über verschiedene, von ihm ausgeführte Links zur weiteren Homepages begleiten, während der Wert der Bonus- und/oder Gewinnvariablen beispielsweise kontinuierlich hochgezählt wird.

Die Erfindung ist nicht auf das in Verbindung mit den Figuren erläuterte Ausführungsbeispiel beschränkt; es lassen sich im Rahmen der Offenbarung dieser Anmeldung beliebig viele weitere Varianten realisieren.

## Patentansprüche

1. Verfahren zur Organisation und Abwicklung eines Internet-Bonussystems und/oder eines Internet-Gewinnspiels, bei dem dem jeweiligen User einer Homepage (5) ein individueller Datensatz (1, 1') zugeordnet ist, welcher den User kennzeichnende Daten (2, 2', 3, 3') und zumindest eine Bonus- und/oder Gewinnvariable (4, 4') umfaßt, wobei die Bonus- und/oder Gewinnvariable (4, 4') während der Aktivierung der Homepage (5) in Abhängigkeit von den vom User auf der Homepage (5) vollzogenen Aktivitäten und/oder von der Verweilzeit des Users auf der Homepage (5) verändert wird, woraufhin der User in Abhängigkeit vom jeweiligen Wert der Bonus- und/oder Gewinnvariablen (4, 4') eine Belohnung erhält.

2. Verfahren nach Anspruch 1,
**dadurch gekennzeichnet,**
**daß** die Art oder der Grad der Belohnung vom erreichten Wert der Bonus- und/oder Gewinnvariablen (4, 4') und/oder vom Eintreten definierter Ereignisse abhängig ist.

3. Verfahren nach einem der vorhergehenden Ansprüche,
**dadurch gekennzeichnet,**
**daß** die Bonus- und/oder Gewinnvariable (4, 4') während der Aktivierung der Homepage (5) zeitlich linear oder zeitlich nicht linear hochgezählt wird.

4. Verfahren nach einem der vorhergehenden Ansprüche,
**dadurch gekennzeichnet,**
**daß** definierte Aktivitäten des Users auf der Homepage (5) ein beschleunigtes oder verlangsamtes Hochzählen, ein Erniedrigen oder eine sprunghafte Veränderung der Bonus- und/oder Gewinnvariablen (4, 4') bewirken.

5. Verfahren nach einem der vorhergehenden Ansprüche,
**dadurch gekennzeichnet,**
**daß** der die Bonus- und/oder Gewinnvariable (4, 4') umfassende, dem User zugeordnete Datensatz (1, 1') nach Verlassen der Homepage (5) gespeichert wird, so daß bei einem erneuten Aufruf der Homepage (5) durch den jeweiligen User, ausgehend von dem gespeicherten Wert, eine weitere Veränderung der Bonus- und/oder Gewinnvariablen (4, 4') möglich ist.

6. Verfahren nach einem der vorhergehenden Ansprüche,
**dadurch gekennzeichnet,**
**daß** die Veränderung der Bonus- und/oder Gewinnvariablen (4, 4') und/oder die Anzeige deren Werts erst nach Aktivierung eines auf der Homepage (5) dargestellten Buttons (A, B, C, D) einsetzt.

7. Verfahren nach einem der vorhergehenden Ansprüche,
**dadurch gekennzeichnet,**
**daß** der aktuelle Wert der Bonus- und/oder Gewinnvariablen (4, 4') während der Aktivierung der Homepage (5) kontinuierlich, insbesondere an einer definierten, vorzugsweise an einer durch eine Mouse-Bewegung definierten Stelle des Bildschirms angezeigt wird.

8. Verfahren nach einem der vorhergehenden Ansprüche,
**dadurch gekennzeichnet,**
**daß** der aktuelle Wert der Bonus- und/oder Gewinnvariablen (4, 4') während der Aktivierung der Homepage (5) in Verbindung mit einem definierten, insbesondere Werbeinformation beinhaltenden Symbol angezeigt wird.

9. Verfahren nach einem der vorhergehenden Ansprüche,
**dadurch gekennzeichnet,**
**daß** dem User eine Mehrzahl von unterschiedlichen Auswahl-Buttons (A, B, C, D) angeboten werden, denen hinsichtlich der Veränderung der jeweils zugeordneten Bonus- und/oder Gewinnvariablen (4, 4') während der Aktivierung der Homepage (5) verschiedene Funktionalitäten zugeordnet sind.

10. Verfahren nach einem der vorhergehenden Ansprüche,
**dadurch gekennzeichnet,**
**daß** eine Veränderung der Bonus- und/oder Gewinnvariablen (4, 4') auch dann erfolgt, wenn der User ausgehend von der Stamm-Homepage (5) einen Link zu definierten weiteren Homepages (6) vollzieht und/oder Aktivitäten auf diesen weiteren Homepages (6) ausführt.

11. Verfahren nach Anspruch 10,
**dadurch gekennzeichnet,**
**daß** der aktuelle Wert der Bonus- und/oder Gewinnvariablen (4, 4') auch während der Aktivierung der weiteren Homepages (6) kontinuierlich, insbesondere in Verbindung mit einem gegenüber der Stamm-Homepage (5) unveränderten definierten Symbol angezeigt wird.

12. Verfahren nach Anspruch 10 oder 11,
**dadurch gekennzeichnet,**
**daß** durch das Auswählen eines Buttons auf der Stamm-Homepage (5) automatisch ein Link auf eine weitere, dem ausgewählten Button zugeordnete Homepage (6) erfolgt.

13. Verfahren nach einem der Ansprüche 10 bis 12,
**dadurch gekennzeichnet,**
**daß** auf der Stamm-Homepage (5) mehrere Auswahlmöglichkeiten für verschiedene Links zu weiteren Homepages, insbesondere in Form von Link-Buttons (E, F, G), angezeigt werden, wobei die Art und/oder die Anzahl der Auswahlmöglichkeiten abhängig von einem zuvor aktivierten Auswahl-Button (A, B, C, D) und/oder abhängig vom erreichten Wert der Bonus- und/oder Gewinnvariablen (4, 4') sind.

14. Verfahren nach einem der vorhergehenden Ansprüche,
**dadurch gekennzeichnet,**
**daß** bestimmte Aktivitäten auf der Stamm-Homepage (5) und/oder auf den weiteren Homepages (6) und/oder die Ausführung bestimmter Links zu weiteren Homepages (6) nur nach Erreichen eines definierten Werts der Bonus- und/oder Gewinnvariablen (4, 4') auslösbar sind.

15. Verfahren nach einem der vorhergehenden Ansprüche,
**dadurch gekennzeichnet,**
**daß** bei einer ersten Kontaktaufnahme eines Users mit der Homepage (5) userspezifische Daten, insbesondere Name, Postanschrift und/oder e-mail-Adresse in dem dem User zugeordneten Datensatz (1, 1') gespeichert werden.

16. Verfahren nach einem der vorhergehenden Ansprüche,
**dadurch gekennzeichnet,**
**daß** die Belohnung über Internet an den User übermittelt wird, insbesondere durch Gutschrift eines bestimmten Betrages an elektronischer Währung, durch Einräumung bestimmter Internet-Shopping-Rechte oder durch Einräumung von über Internet ausübbaren Nutzungsrechten.
